# FASCICULE DE BREVET EUROPEEN

(11) **EP 1 418 858 B1**
(45) Date de publication et mention de la délivrance du brevet: **26.04.2006**
(21) Numéro de dépôt: 02767577.6
(22) Date de dépôt: 17.07.2002
(51) Int. Cl.: A61C 8/00

(54) **IMPLANT A USAGE DENTAIRE OU ANALOGUE, COMPRENANT UN NOYAU ET UN MANCHON EN CERAMIQUE RELIES L'UN A L'AUTRE PAR COLLAGE**
DENTALIMPLANTAT ODER DERGLEICHEN, UMFASSEND EINEN KERN UND EINE KERAMIKHÜLLE, DIE DURCH VERKLEBEN VERBUNDEN SIND
DENTAL IMPLANT OR THE LIKE, COMPRISING A CORE AND A CERAMIC SLEEVE ASSEMBLED BY BONDING

(30) Priorité: 03.08.2001 FR 0110428
(43) Date de publication de la demande: 19.05.2004
(73) Titulaire: SUDIMPLANT, 31500 Toulouse (FR)
(72) Inventeur: Benhamou, André, 31130 Balma (FR)
(74) Mandataire: Ravina, Bernard
(86) Numéro de dépôt international: PCT/FR2002/002544
(87) Numéro de publication internationale: WO 2003/013385

(56) Documents cités:
- DE-A- 2 419 080
- US-A- 5 310 343
- US-A- 5 584 693
- US-A- 5 954 505

## Description

L'invention est du domaine médical, et plus particulièrement du domaine des implants. Elle a pour objet un implant à usage dentaire ou composant prothétique, comprenant une armature métallique ou synthétique et un manchon extérieur en céramique.

On connaît des implants à usage dentaire prévus pour être insérés au moins en partie dans un logement osseux. Pour conférer à ces implants à la fois une résistance mécanique satisfaisante et une compatibilité biologique avec les tissus organiques du patient, il a été proposé d'associer un noyau métallique robuste avec un revêtement ou avec un manchon extérieur en céramique in intégrable par l'organisme vivant. On pourra notamment se reporter aux brevets FR2778091 (BENHAMOU), DE24 19080 (KIRSCHNER), FR2745998 (PROSIS), FR2693900 (PROSIS), US4713006 (HAKAMATSUKA), US5310343 (HASAGAWA) et EP0405556 (TDK).

Un problème à résoudre réside dans la liaison entre le noyau et le manchon extérieur en céramique. Selon une première technique, cette liaison est effectuée par l'intermédiaire d'une masse cohésive pour céramique fixée par brûlage sur le noyau (DE2419080). Selon une deuxième technique, cette liaison est une liaison mécanique, soit par emboîtement (FR2745998 et FR2693900), soit par vissage (US5310343, US4713006). Il a aussi été proposé par FR2778091 une troisième solution, consistant effectuer cette liaison par collage.

D'une manière générale, la liaison obtenue est robuste. Toutefois, il est apparu que cette robustesse pouvait finalement porter atteinte à la fiabilité de la liaison entre le noyau et la couche extérieure en céramique, et à la résistance générale de l'implant.

En outre, en ce qui concerne les liaisons selon lesquelles la couche en céramique et le noyau sont des éléments distincts assemblés, une difficulté à surmonter réside dans le centrage délicat entre la couche en céramique et le noyau.

Dans le cas d'une liaison par emboîtement, l'inconvénient susvisé lié à la rigidité de la liaison est d'autant plus important. En outre, l'emboîtement en force provoque des contraintes inopportunes sur les éléments assemblés, et notamment sur l'élément en céramique, ce qui le fragilise.

Dans le cas d'une liaison par visage, le jeu présent entre les filets de vis rend d'autant délicat ce centrage, et nécessite, tel que selon US4713006 l'utilisation d'une masse souple intermédiaire d'absorption de ce jeu.

Le document US 5584693 décrit un implant comportant un noyau intérieur et un manchon extérieur. Le manchon extérieur peut être en céramique, en métal ou autres et le noyau en métal ou en céramique reliés par collage.

Le document US5954505 décrit un implant avec un noyau métallique et un manchon extérieur métallique assemblés par collage avec, du fait de la colle, une résilience de l'assemblage.

Le but de la présente invention est de proposer un implant à usage dentaire ou composant prothétique du genre susvisé, dont la liaison entre le noyau qui peut être métallique ou synthétique et le manchon extérieur en céramique soit ferme sans pour autant impliquer une rigidité préjudiciable de cette liaison. Toujours selon ce but, il est proposé une telle liaison avec un centrage précis entre le noyau et la couche extérieure en céramique. Cet objectif est résolus par l'objet de la revendication 1.

La démarche inventive de la présente invention a consisté dans sa généralité à faire le choix d'une liaison par collage entre le noyau et le manchon extérieur en céramique. Ce manchon extérieur est formé d'un manchon distinct du noyau rapporté sur ce dernier par emboîtement glissant et fixé par collage. Cet emboîtement est effectué en ménageant entre le noyau et le manchon une réserve pour recevoir la colle, cette réserve étant d'un volume suffisant pour autoriser une mobilité relative entre le manchon et le noyau, en vue d'absorber les chocs que subit l'implant, jouant un rôle amortisseur permettant une fonction de résilience, sans pour autant porter atteinte à la fermeté de la liaison obtenue, ni induire un jeu conséquent entre le noyau et le manchon de céramique.

On relèvera aussi que le manchon étant formé indépendamment du noyau, par moulage notamment pour être fixé ensuite sur celui-ci, il est aisé de l'obtenir avec des dimensions en rapport à celles du noyau pour la formation de la réserve.

Cette réserve de réception de la colle est formée par un écart entre les parois correspondantes du noyau et du manchon, de manière à ménager entre elles un jeu, de l'ordre compris entre 80 à 150 microns.

Pour favoriser l'adhérence de la colle sur le métal, le noyau comporte de préférence des stries.

La colle utilisée est avantageusement une résine monocomposante sans solvant polymérisant sous exposition U.V.A.

Plus particulièrement, cette colle est préférence une colle thixotropique d'une densité de l'ordre de 1,12 g/cm3 à 25°C, dont le temps de prise sous une exposition de 40mW/cm2 est de l'ordre de 10 secondes. Cette colle offre après polymérisation une dureté shore de l'ordre de 75D, avec une résistance en température de l'ordre comprise entre -50°C et +135°C.

De préférence, la matière du noyau est le titane ou autre métal tandis que celle du manchon est la zircone ou l'alumine.

Le noyau peut également être réalisé en un matériau synthétique.

La présente invention sera mieux comprise et des détails en relevant apparaîtront à la description qui va en être faite d'exemples de réalisation, en relation avec les figures de la planche annexée, dans laquelle :

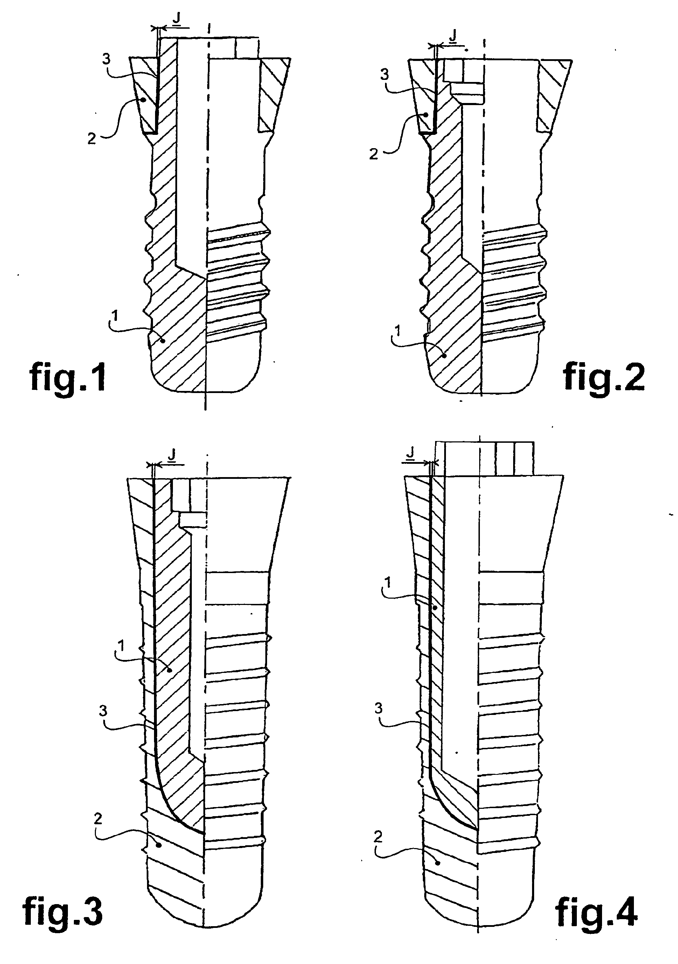

Les fig.1 à fig.4 sont des vues en demi-coupe longitudinale de différentes variantes respectives de réalisation d'un implant dentaire selon une première forme de réalisation de l'invention,

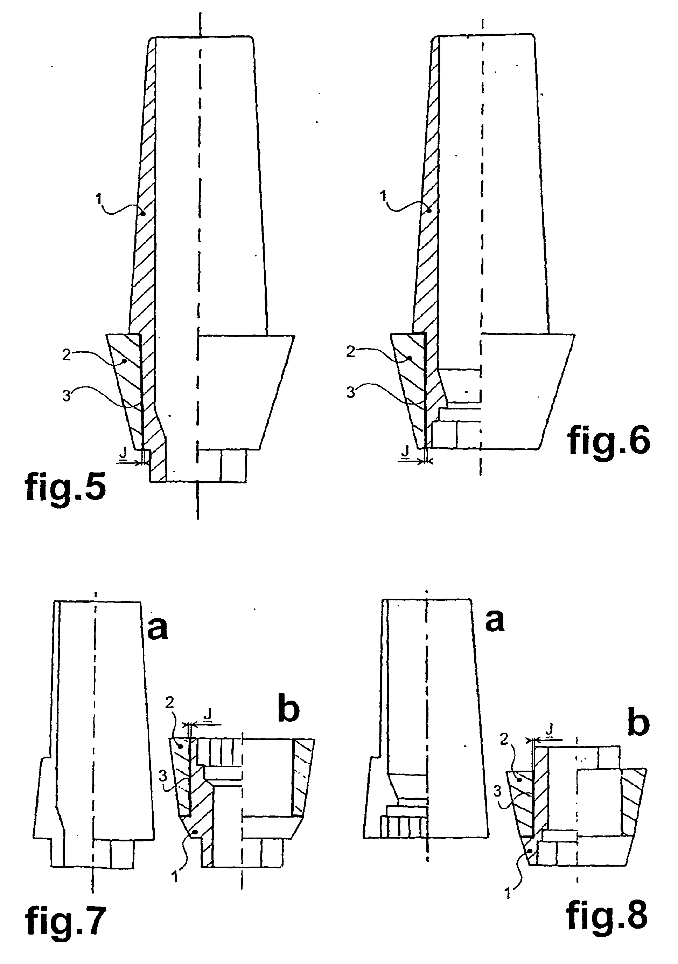

Les fig.5 et 6 sont des vues en demi-coupe longitudinale de composant prothétique monobloc,
Les fig.7 et fig.8 sont des vues en demi-coupe longitudinale de différentes variantes respectives de réalisation d'un composant prothétique dentaire selon une deuxième forme de réalisation de l'invention, dans laquelle le moignon est composé de deux éléments respectivement a et b prévus pour être assemblés l'un à l'autre.

Sur les figures, un implant à usage dentaire ou analogue comprend un noyau métallique 1 et une couche extérieure 2 en céramique, qui enveloppe au moins partiellement le noyau 1. La couche extérieure en céramique est constituée d'un manchon en zircone 2, obtenu par moulage, qui est rapporté après son obtention autour du noyau 1, auquel il est fixé par collage.

Un jeu J est ménagé entre les faces correspondantes en vis-à-vis du noyau 1 et du manchon 2, pour former entre celles-ci une réserve 3 de réception de la colle.

## Revendications

1. Implant à usage dentaire ou analogue, du genre d'implant comprenant un noyau métallique ou synthétique (1) et une gaine extérieure (2) en céramique enveloppant au moins partiellement le noyau (1), ceux-ci étant reliés l'un à l'autre par collage, **caractérisé :**
**en ce que** la gaine extérieure en céramique est formée d'un manchon (2) distinct du noyau (1), rapporté sur ce dernier par emboîtement glissant et fixé par collage, en ménageant entre eux une réserve (3) pour la colle d'un volume suffisant pour absorber les chocs que subit l'implant, jouant ainsi un rôle amortisseur, sans pour autant induire un jeu conséquent entre le noyau (1) et le manchon (2) de céramique,
et **en ce que** la réserve (3) de colle ménagée entre les parois correspondantes du noyau (1) et du manchon (2) est formée d'un écart J entre ces parois de l'ordre compris entre 80 et 150 microns.

2. Implant selon l'une quelconque des revendications précédentes, **caractérisé :**
**en ce que** le noyau (1) comporte de stries pour favoriser l'adhérence de la colle sur le noyau.

3. Implant selon l'une quelconque des revendications précédentes, **caractérisé :**
**en ce que** la colle est une résine monocomposante sans solvant polymérisant sous exposition U.V.A.

4. Implant selon la revendication 3, **caractérisé :**
**en ce que** la colle est une colle thixotropique d'une densité de l'ordre de 1,12g/cm3 à 25°C, dont le temps de prise sous une exposition de 40mW/cm2 est de l'ordre de 10 secondes, cette colle offrant après polymérisation une dureté shore de l'ordre de 75D, avec une résistance en température de l'ordre comprise entre -55°C et +135°C.

5. Implant selon l'une quelconque des revendications précédentes, **caractérisé :**
**en ce que** la matière du noyau (1) est métallique.

6. Implant selon l'une quelconque des revendications précédentes, **caractérisé :**
**en ce que** la matière du noyau (1) est synthétique.

7. Implant selon l'une quelconque des revendications précédentes, **caractérisé :**
**en ce que** la matière du manchon (2) est la zircone.

## Claims

1. An implant for dental use or the like, of the type of implant comprising a metallic or synthetic core (1) and an external ceramic sheath (2) at least partially enveloping the core (1), these being connected to each other by adhesive bonding, **characterised: in that** the external ceramic sheath is formed by a sleeve (2) distinct from the core (1), attached to the latter by sliding fitting and fixed by adhesive bonding, forming between them a space (3) for the adhesive of sufficient volume to absorb impacts that an implant undergoes, thus fulfilling a damping role, without for all that causing any consequent play between the core (1) and the ceramic sleeve (2), and **in that** the space (3) for adhesive formed between the corresponding walls of the core (1) and sleeve (2) is formed by a separation J between these walls of between approximately 80 and 150 microns.

2. An implant according to any one of the preceding claims, **characterised:**
**in that** the core (1) comprises striations for promoting the adherence of the adhesive on the core.

3. An implant according to any one of the preceding claims, **characterised:**
**in that** the adhesive is a single-component solvent-free resin that polymerises on UVA exposure.

4. An implant according to claim 3, **characterised:**
**in that** the adhesive is a thixotropic adhesive with a density in the order of 1.12 g/cm³ at 25°C, whose setting time on exposure of 40 mW/cm² is in the order of 10 seconds, this adhesive offering after polymerisation a Shore hardness in order of 75D, with a temperature resistance of between approximately -55°C and +135°C.

5. An implant according to any one of the preceding claims, **characterised:**
**in that** the material of the core (1) is metallic.

6. An implant according to any one of the preceding claims, **characterised:**
**in that** the material of the core (1) is synthetic.

7. An implant according to any one of the preceding claims, **characterised:**
**in that** the material of the sleeve (2) is zirconia.

## Patentansprüche

1. Dentalimplantat oder dergleichen von der Art Implantat mit einem Kern aus Metall oder Kunststoff (1) und einer Außenhülle (2) aus Keramik, die den Kern (1) mindestens teilweise umhüllt, wobei diese durch Kleben miteinander verbunden sind, **dadurch gekennzeichnet, daß** die Außenhülle aus Keramik von einer Hülle (2) gebildet ist, die vom Kern (1) verschieden und auf diesem durch gleitendes Einschieben angebracht und durch Kleben befestigt ist, wobei zwischen diesen eine Reserve (3) für den Klebstoff mit einem genügenden Volumen ausgebildet ist, um die auf das Implantat ausgeübten Stöße zu absorbieren, die so eine Dämpfungsrolle spielt, ohne **dadurch** ein Spiel zwischen dem Kern (1) und der Keramikhülle (2) einzuführen,
und daß die Reserve (3) von Klebstoff, die zwischen den entsprechenden Wänden des Kerns (1) und der Hülle (2) ausgebildet ist, von einem Abstand J zwischen diesen Wänden in der Größenordnung zwischen 80 und 150 µm gebildet ist.

2. Implantat nach dem vorangehenden Anspruch, **dadurch gekennzeichnet, daß** der Kern (1) Riefen aufweist, um die Haftung des Klebstoffs auf dem Kern zu begünstigen.

3. Implantat nach einem der vorangehenden Ansprüche, **dadurch gekennzeichnet, daß** der Klebstoff ein Einkomponentenharz ohne Lösungsmittel ist, das unter UV-A-Belichtung polymerisiert.

4. Implantat nach Anspruch 3, **dadurch gekennzeichnet, daß** der Klebstoff ein thixotroper Klebstoff mit einer Dichte in einer Größenordnung von 1,12 g/cm³ bei 25° C ist, dessen Abbindezeit unter einer Belichtung von 40 mW/cm² in der Größenordnung von 10 Sekunden liegt, wobei dieser Klebstoff nach der Polymerisation eine Shore-Härte in der Größenordnung von 75D und eine Temperaturbeständigkeit in der Größenordnung zwischen -55° C und +135° C aufweist.

5. Implantat nach einem der vorangehenden Ansprüche, **dadurch gekennzeichnet, daß** das Material des Kerns (1) metallisch ist.

6. Implantat nach einem der Ansprüche 1 bis 4, **dadurch gekennzeichnet, daß** das Material des Kerns (1) synthetisch ist.

7. Implantat nach einem der vorangehenden Ansprüche, **dadurch gekennzeichnet, daß** das Material der Hülle (2) Zirconiumdioxid ist.
